(19) Europäisches Patentamt
European Patent Office
Office européen des brevets

(11) EP 2 382 269 B1

(12) **EUROPÄISCHE PATENTSCHRIFT**

(45) Veröffentlichungstag und Bekanntmachung des Hinweises auf die Patenterteilung:
**14.12.2016 Patentblatt 2016/50**

(21) Anmeldenummer: **09795707.0**

(22) Anmeldetag: **15.12.2009**

(51) Int Cl.:
***C08L 69/00*** *(2006.01)*

(86) Internationale Anmeldenummer:
**PCT/EP2009/008966**

(87) Internationale Veröffentlichungsnummer:
**WO 2010/072351 (01.07.2010 Gazette 2010/26)**

(54) **FLAMMGESCHÜTZTE SCHLAGZÄHMODIFIZIERTE POLYCARBONAT-ZUSAMMENSETZUNGEN**

FLAME-PROTECTED IMPACT STRENGTH MODIFIED POLYCARBONATE COMPOUNDS

COMPOSITIONS DE POLYCARBONATE RÉSISTANT AU CHOC, IGNIFUGÉES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.12.2008 DE 102008062903**

(43) Veröffentlichungstag der Anmeldung:
**02.11.2011 Patentblatt 2011/44**

(73) Patentinhaber: **Covestro Deutschland AG**
**51373 Leverkusen (DE)**

(72) Erfinder:
- **ECKEL, Thomas**
  **41540 Dormagen (DE)**
- **TASCHNER, Vera**
  **50823 Köln (DE)**
- **FELDERMANN, Achim**
  **40597 Düsseldorf (DE)**
- **WENZ, Eckhard**
  **50931 Köln (DE)**

(74) Vertreter: **Levpat**
**c/o Covestro AG**
**Gebäude 4825**
**51365 Leverkusen (DE)**

(56) Entgegenhaltungen:
**EP-A2- 0 641 827 DE-A1-102007 002 925**
**JP-A- 8 259 791**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 382 269 B1

## Beschreibung

Die vorliegende Erfindung betrifft schlagzähmodifizierte Polycarbonat-Zusammensetzungen, welche ein erstes Pfropfpolymerisat enthaltend Silikonacrylat-Komposit-Kautschuk als Pfropfgrundlage, wobei der Anteil an Silikonkautschuk 65 - 95 Gew.-% (bezogen auf die Pfropfgrundlage) beträgt, ein zweites Pfropfpolymerisat enthaltend einen Dien-Kautschuk, und phosphorhaltige Flammschutzmittel enthalten, die Verwendung der Polycarbonat-Zusammensetzungen zur Herstellung von Formkörpern und die Formkörper selbst.

US 2002/077417 A1 offenbart flammgeschützte Zusammensetzungen enthaltend (a) Polycarbonat, (b) Propfpolymer mit einem Silikonacrylat-Kompositkautschuk, wobei das Verhältnis von Silikon zu Acrylat 99:1 bis 1:99 beträgt, (c) gegebenenfalls Füllstoff wie beispielsweise Talk, (d) Phosphorsäureester als Flammschutzmittel, (e) gegebenenfalls weitere Additive wie beispielsweise ABS, SAN und Antidrippingmittel. Als Beispiele werden Zusammensetzungen enthaltend Metablen® S-2001 offenbart, welches ein Pfropfpolymer mit einer Pfropfgrundlage aus Silikon-Butylacrylat-Kompositkautschuk ist, welche aus ca. 17 Gew.-% Methylmethacrylat, ca. 9 Gew.-% Organosiloxan und ca. 74 Gew.-% Butylacrylat besteht. US 2002/077417 A1 offenbart aber nicht Zusammensetzungen enthaltend ein Pfropfpolymerisat mit einem Silikonacrylat-Komposit-Kautschuk als Pfropfgrundlage, wobei der Anteil an Silikonkautschuk 65 - 95 Gew.-% (bezogen auf die Pfropfgrundlage) beträgt.

JP-A 08-259791 offenbart flammgeschützte Zusammensetzungen enthaltend Polycarbonat und einen Silikonacrylatkautschuk mit 30-99% Siloxan.

JP-A 2000-017136 offenbart Zusammensetzungen enthaltend Polycarbonat, 1 bis 40 Gew.-% oligomere Phosphorsäureester und Pfropfpolymer mit einer Pfropfgrundlage aus Silikonacrylatkautschuk, welches 60-99 Gew.-% Polyorganosiloxan enthält, gegebenenfalls Polytetrafluorethylen und gegebenenfalls Talk.

JP-A 2002-069282 offenbart Zusammensetzungen enthaltend Polycarbonat, Kompositkautschuk (wie beispielsweise Metablen® SX-005), oligomere Phosphorsäureester, Silikonöl, gegebenenfalls Polytetrafluorethylen und gegebenenfalls Additive.

WO-A 00/39210 offenbart Zusammensetzungen enthaltend Polycarbonat, Copolymer, oligomere Phosphorsäureester, Pfropfpoylmer (beispielsweise Metablen S-2001) mit einem Silikonacrylatkautschuk als Pfropfgrundlage, wobei der Anteil an Polyorganosiloxan größer 50 Gew.-%, vorzugsweise größer 70 Gew.-% beträgt, gegebenenfalls Polytetrafluorethylen und einem Verstärkungsstoff wie beispielsweise Talk.

EP-A 0 641 827 offenbart Zusammensetzungen enthaltend aromatisches Polycarbonat, Pfropfpoylmer von Vinylmonomer auf Dienkautschuk, Phosphorsäureester, Polytetrafluorethylen, anorganischen Füllstoff wie beispielsweise Talk und Kompositkautschuk aus Silikon- und Acrylatkautschuk.

JP-A 07316409 offenbart Zusammensetzungen enthaltend Polycarbonat, Phosphorsäureester, Pfropfpoylmer mit einem Silikonacrylatkautschuk als Pfropfgrundlage, wobei der Anteil an Polyorganosiloxan 1 - 99 Gew.-% und der Anteil an Polyalkyl(meth)acrylatkautschuk 99 - 1 Gew.-% betragen.

DE 10 2007 002925 (A1) offenbart gefüllte, schlagzähmodifizierte Polycarbonat-Zusammensetzungen enthaltend Polycarbonat und/oder Polyestercarbonat, ein erstes Pfropfpolymerisat auf Basis von mindestens 50 Gew.-% Silikonkautschuk und ein zweites Pfropfpolymerisat auf Basis eines EP(D)M-Kautschuks sowie kautschukfreies Vinyl(co)polymerisat und Polymeradditive. Die Zusammensetzungen zeichnen sich durch gute Alterungsbeständigkeit, gute Tieftemperaturzähigkeit und niedrigen Glanz aus.

Die oben genannten Dokumente des Standes der Technik offenbaren aber nicht Zusammensetzungen enthaltend ein zweites Pfropfpolymerisat mit einem Dien-Kautschuk der Gruppe bestehend aus Butadienkautschuk und Isoprenkautschuk als Pfropfgrundlage.

Aufgabe der vorliegenden Erfindung ist die Bereitstellung von flammgeschützten schlagzähmodifizierten Polycarbonat-Formmassen mit einer optimalen Kombination aus gutem Flammschutz bei dünnen Wandstärken, guter Chemikalien- und Hydrolysebeständigkeit und niedriger Schmelzeviskosität.

Es wurde somit überraschend gefunden, dass Zusammensetzungen enthaltend

A) 40 bis 99 Gew.-Teile, bevorzugt 59 bis 97 Gew.-Teile, besonders bevorzugt 70 bis 90 Gew.-Teile (jeweils bezogen auf die Summe der Gewichtsteile der Komponenten A+B+C+D) aromatisches Polycarbonat und/oder aromatisches Polyestercarbonat,

B) 0,5 bis 20 Gew.-Teile, bevorzugt 1 bis 12 Gew.-Teile, besonders bevorzugt 2 bis 8 Gew.-Teile (jeweils bezogen auf die Summe der Gewichtsteile der Komponenten A+B+C+D) Pfropfpolymerisat, dadurch gekennzeichnet, dass die Pfropfgrundlage ein Silikonacrylat-Komposit-Kautschuk aus sich gegenseitig durchdringendem Silikonkautschuk- und Polyalkyl(meth)acrylatkautschuk ist, wobei der Anteil an Silikonkautschuk 65 - 95 Gew.-% (bezogen auf die Pfropfgrundlage) beträgt,

C) 2 bis 8 Gew.-Teile (bezogen auf die Summe der Gewichtsteile der Komponenten A+B+C+D) Pfropfpolymerisat von

C.1 5 bis 95 Gew.-%, wenigstens eines Vinylmonomeren auf

C.2 95 bis 5 Gew.-% wenigstens einer Pfropfgrundlage ausgewählt aus mindestens einem Dienkautschuk der Gruppe bestehend aus Dienkautschuk und Isoprenkautschuk.

D) 0,4 bis 20 Gew.-Teile, bevorzugt 4 bis 17 Gew.-Teile, besonders bevorzugt 8 bis 14 Gew.-Teile (jeweils bezogen auf die Summe der Gewichtsteile der Komponenten A+B+C+D) Flammschutzmittel ausgewählt aus mindestens einem der Gruppe bestehend aus bestehend aus Mono- und oligomeren Phosphorsäureester der Formel (VIII)

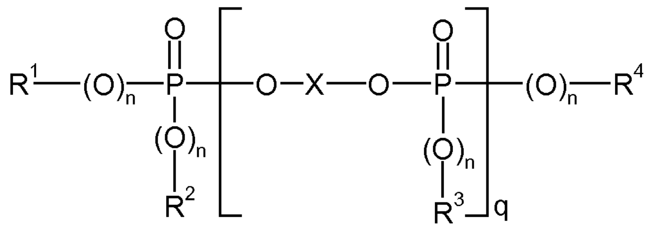

(VIII)

worin

$R^1$, $R^2$, $R^3$ und $R^4$ für Kresyl, Phenyl, Xylenyl, Propylphenyl oder Butylphenyl steht,
n gleich 1 ist,
q für Werte von 0,5 bis 6 steht, und
X sich von Resorcin, Hydrochinon, Bisphenol A oder Diphenylphenol ableitet,

E) 0 bis 50 Gew.-Teile, bevorzugt 0,5 bis 25 Gew.-Teile (jeweils bezogen auf die Summe der Gewichtsteile der Komponenten A+B+C+D) eines oder mehrerer Zusatzstoffe ausgewählt aus der Gruppe bestehend aus Flammschutzsynergisten, Antidrippingmittel, Gleit- und Entformungsmittel, Nukleiermittel, Stabilisatoren, Antistatika, Säuren, Füll- und Verstärkungsstoffe sowie Farbstoffe und Pigmente,

wobei die Zusammensetzung frei ist von kautschukfreiem Vinyl(Co)Polymerisat und Polyalkylenterephthalat, wobei alle Gewichtsteilangaben in der vorliegenden Anmeldung so normiert sind, dass die Summe der Gewichtsteile der Komponenten A+B+C+D in der Zusammensetzung 100 ergeben, die oben genannte technische Aufgabe lösen.

**Komponente A**

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

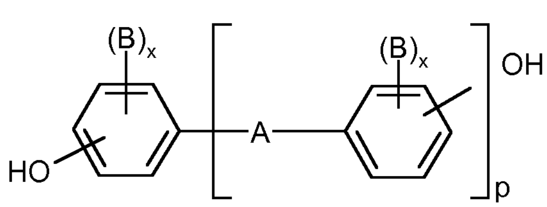

(I),

wobei

A eine Einfachbindung, $C_1$ bis $C_5$-Alkylen, $C_2$ bis $C_5$-Alkyliden, $C_5$ bis $C_6$-Cycloalkyliden,-O-, -SO-, -CO-, -S-, $-SO_2-$, $C_6$ bis $C_{12}$-Arylen, an das weitere aromatische gegebenenfalls Heteroatome enthaltende Ringe kondensiert sein können, oder ein Rest der Formel (II) oder (III)

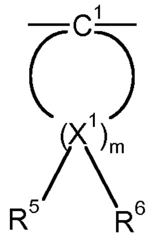

(II)

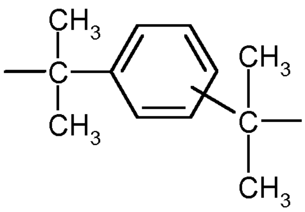

(III)

B jeweils $C_1$ bis $C_{12}$-Alkyl, vorzugsweise Methyl, Halogen, vorzugsweise Chlor und/oder Brom
x jeweils unabhängig voneinander 0, 1 oder 2,
p 1 oder 0 sind, und
$R^5$ und $R^6$ für jedes $X^1$ individuell wählbar, unabhängig voneinander Wasserstoff oder $C_1$ bis $C_6$ Alkyl, vorzugsweise Wasserstoff, Methyl oder Ethyl,
$X^1$ Kohlenstoff und
m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3,3,5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A). Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethyl-butyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%mol-%, und 10 mol-%mol-%, bezogen auf die Molsumme der jeweils eingesetzten Diphenole.

Die thermoplastischen, aromatischen Polycarbonate haben mittlere Gewichtsmittelmolekulargewichte ($M_w$, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Die thermoplastischen, aromatischen Polycarbonate können in bekannter Weise verzweigt sein, und zwar vorzugsweise durch den Einbau von 0,05 bis 2,0 mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt

werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure. Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 mol-%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 mol-% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis-(4-hydroxy-phenyl)-cyclohexyl]-propan, 2,4-Bis-(4-hydroxyphenyl-isopropyl)-phenol, Tetra-(4-hydroxyphenyl)-methan, 2,6-Bis-(2-hydroxy-5'-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis-[4',4"-dihydroxytriphenyl)-methyl]-benzol, in Mengen von 0,01 bis 1,0 mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

**Komponente B**

Die Komponente B umfasst bevorzugt ein oder mehrere Pfropfpolymerisate von

B.1 5 bis 95 Gew.-%, vorzugsweise 10 bis 90 Gew.-% eines oder mehrerer Vinylmonomeren auf
B.2 95 bis 5 Gew.-%, vorzugsweise 90 bis 10 Gew.-% eines oder mehrerer Silikonacrylat-Komposit-Kautschuke als Pfropfgrundlage, wobei der Silikonacrylat-Kautschuk

B.2.1 65 - 95 Gew.-% Silikonkautschuk- und
B.2.2 35 bis 5 Gew.-% Polyalkyl(meth)acrylatkautschuk enthält,

wobei sich die beiden genannten Kautschuk-Komponenten B.2.1 und B.2.2 im Komposit-Kautschuk gegenseitig durchdringen, so daß sie sich nicht wesentlich voneinander trennen lassen.

Die Pfropfcopolymerisate B werden durch radikalische Polymerisation, z.B. durch Emulsions-, Suspensions-,

Lösungs- oder Massepolymerisation, vorzugsweise durch Emulsions- oder Massepolymerisation hergestellt.

Geeignete Monomere B.1 sind Vinylmonomere wie Vinylaromaten und/oder kernsubstituierte Vinylaromaten (wie Styrol, α-Methylstyrol, p-Methylstyrol, p-Chlorstyrol), Methacrylsäure-($C_1$-$C_8$)-Alkylester (wie Methylmethacrylat, Ethylmethacrylat, 2-Ethylhexylmethacrylat, Allylmethacrylat), Acrylsäure-($C_1$-$C_8$)-Alkylester (wie Methylacrylat, Ethylacrylat, n-Butylacrylat, t-Butylacrylat), organische Säuren (wie Acrylsäure, Methacrylsäure), und/oder Vinylcyanide (wie Acrylnitril und Methacrylnitril), und/oder Derivate (wie Anhydride und Imide) ungesättigter Carbonsäuren (beispielsweise Maleinsäureanhydrid und N-Phenyl-Maleinimid). Diese Vinylmonomere können alleine oder in Mischungen von mindestens zwei Monomeren verwendet werden.

Bevorzugte Monomere B.1 sind ausgewählt aus mindestens einem der Monomere Styrol, α-Methylstyrol, Methylmethacrylat, n-Butylacrylat und Acrylnitril. Besonders bevorzugt wird als Monomer B.1 Methylmethacrylat eingesetzt.

Die Glasübergangstemperatur der Pfropfgrundlage B.2 beträgt < 10°C, vorzugsweise < 0°C, besonders bevorzugt < -20°C. Die Pfropfgrundlage B.2 hat im Allgemeinen eine mittlere Teilchengröße ($d_{50}$-Wert) von 0,05 bis 10 μm, vorzugsweise 0,06 bis 5 μm, besonders bevorzugt 0,08 bis 1 μm.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid-Z. und Z. Polymere 250 (1972), 782-796) bestimmt werden.

Als Pfropfgrundlagen B.2 sind erfindungsgemäß hochsilikonhaltige Silikonacrylat-Kautschuke geeignet. Diese Silikonacrylat-Kautschuke sind Komposit-Kautschuke mit pfropfaktiven Stellen enthaltend 65 - 95 Gew.-% Silikonkautschuk-Anteil und 35 bis 5 Gew.-% Polyalkyl(meth)acrylatkautschuk-Anteil, wobei sich die beiden genannten Kautschuk-Komponenten im Komposit-Kautschuk gegenseitig durchdringen, so daß sie sich nicht wesentlich voneinander trennen lassen. Silikonacrylat-Kautschuke sind bekannt und beispielsweise beschrieben in US 5,807,914, EP 430134 und US 4888388.

Geeignete Silikonkautschuk-Komponenten der Silikonacrylat-Kautschuke sind Silikonkautschuke mit pfropfaktiven Stellen, deren Herstellungsmethode beispielsweise in US 2891920, US 3294725, DE-OS 3 631 540, EP 249964, EP 430134 und US 4888388 beschrieben wird.

Der Silikonkautschuk wird bevorzugt durch Emulsionspolymerisation hergestellt, bei der Siloxan-Monomerbausteine, Vernetzungs- oder Verzweigungsmittel (IV) und gegebenenfalls Pfropfmittel (V) eingesetzt werden.

Als Siloxan-Monomerbausteine werden beispielsweise und bevorzugt Dimethylsiloxan oder cyclische Organosiloxane mit wenigstens 3 Ringgliedern, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotrisiloxane, Tetramethyl-tetraphenyl-cyclotetrasiloxane, Octaphenylcyclotetrasiloxan eingesetzt.

Die Organosiloxan-Monomere können allein oder in Form von Mischungen mit 2 oder mehr Monomeren eingesetzt werden. Der Silikonkautschuk enthält vorzugsweise nicht weniger als 50 Gew.-% und besonders bevorzugt nicht weniger als 60 Gew.-% Organosiloxan, bezogen auf das Gesamtgewicht der Silikonkautschuk-Komponente.

Als Vernetzungs- oder Verzweigungsmittel (IV) werden vorzugsweise silanbasierende Vernetzungsmittel mit einer Funktionalität von 3 oder 4, besonders bevorzugt 4, verwendet. Beispielhaft und vorzugsweise seien genannt: Trimethoxymethylsilan, Triethoxyphenylsilan, Tetramethoxysilan, Tetraethoxysilan, Tetra-n-propoxysilan und Tetrabutoxysilan. Das Vernetzungsmittel kann allein oder in Mischung von zwei oder mehreren eingesetzt werden. Besonders bevorzugt ist Tetraethoxysilan.

Das Vernetzungsmittel wird in einem Mengenbereich zwischen 0,1 und 40 Gew.-%, bezogen auf das Gesamtgewicht der Silikonkautschuk-Komponente, eingesetzt. Die Menge an Vernetzungsmittel wird so gewählt, dass der Quellungsgrad des Silikonkautschuks, gemessen in Toluol, zwischen 3 und 30 liegt, bevorzugt zwischen 3 und 25, und besonders bevorzugt zwischen 3 und 15. Der Quellungsgrad ist definiert als das Gewichtsverhältnis zwischen der Menge Toluol, die durch den Silikonkautschuk absorbiert wird, wenn er mit Toluol bei 25°C gesättigt wird, und der Menge an Silikonkautschuk im getrockneten Zustand. Die Ermittlung des Quellungsgrades ist im Detail in EP 249964 beschrieben.

Wenn der Quellungsgrad geringer als 3 ist, d.h. wenn der Gehalt an Vernetzungsmittel zu hoch ist, zeigt der Silikonkautschuk nicht ausreichend Kautschukelastizität. Wenn der Quellungsindex größer als 30 ist, kann der Silikonkautschuk keine Domänenstruktur im Matrixpolymer ausbilden und daher auch keine Schlagzähigkeit verbessern, der Effekt wäre dann ähnlich einer einfachen Zugabe von Polydimethylsiloxan.

Tetrafunktionelle Vernetzungsmittel sind bevorzugt gegenüber trifunktionellen, weil dann der Quellungsgrad einfacher kontrollierbarer innerhalb der oben beschriebenen Grenzen ist.

Als Pfropfmittel (V) geeignet sind Verbindungen, die fähig sind, Strukturen der folgenden Formeln zu bilden:

$$CH_2=C(R^2)\text{-}COO\text{-}(CH_2)_p\text{-}SiR^1_nO_{(3-n)/2} \qquad \text{(V-1)}$$

$$CH_2=CH\text{-}SiR^1_nO_{(3-n)/2} \qquad \text{(V-2)}$$

oder

$$HS-(CH_2)_p-SiR^1{}_nO_{(3-n)/2} \qquad (V-3),$$

wobei

$R^1$ für $C_1$-$C_4$-Alkyl, vorzugsweise Methyl, Ethyl oder Propyl, oder Phenyl,
$R^2$ für Wasserstoff oder Methyl stehen,
n 0, 1 oder 2 und
p eine ganze Zahl von 1 bis 6 bedeuten.

Acryloyl- oder Methacryloyloxysilane sind besonders geeignet, die o.g. Struktur (V-1) zu bilden, und haben eine hohe Pfropfeffizienz. Dadurch wird eine effektive Bildung der Pfropfketten gewährleistet, und somit die Schlagzähigkeit der resultierenden Harzzusammensetzung begünstigt.

Beispielhaft und bevorzugt seien genannt: β-Methacryloyloxy-ethyldimethoxymethyl-silan, γ-Methacryloyloxy-propylmethoxydimethyl-silan, γ-Methacryloyloxy-propyldimethoxymethyl-silan, γ- Methacryloyloxy-propyltrimethoxy-silan, γ-Methacryloyloxy-propylethoxydiethyl-silan, γ-Methacryloyloxy-propyldiethoxymethyl-silan, δ-Methacryloyl-oxy-butyldiethoxymethyl-silane oder Mischungen hieraus.

Bevorzugt werden 0 bis 20 Gew.-% Pfropfmittel bezogen auf das Gesamtgewicht des Silikonkautschuks eingesetzt.

Geeignete Polyalkyl(meth)acrylatkautschuk-Komponenten der Silikonacrylat-Kautschuke können hergestellt werden aus Methacrylsäurealkylestern und/oder Acrylsäurealkylestern, einem Vernetzungsmittel (VI) und einem Pfropfmittel (VII). Hierbei sind beispielhafte und bevorzugte Methacrylsäurealkylester und/oder Acrylsäurealkylester die $C_1$ bis $C_8$-Alkylester, beispielsweise Methyl-, Ethyl-, n-Butyl-, t-Butyl-, n-Propyl-, n-Hexyl-, n-Octyl-, n-Lauryl- und 2-Ethylhexylester; Halogenalkylester, vorzugsweise Halogen-$C_1$-$C_8$-alkylester, wie Chlorethylacrylat sowie Mischungen dieser Monomeren. Besonders bevorzugt ist n-Butylacrylat.

Als Vernetzungsmittel (VI) für die Polyalkyl(meth)acrylatkautschuk-Komponente des Silikonacrylat-Kautschuks können Monomere mit mehr als einer polymerisierbaren Doppelbindung eingesetzt werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Propylenglykoldimethacrylat, 1,3-Butylenglykoldimethacrylat und 1,4-Butylenglykoldimethacrylat. Die Vernetzungsmittel können alleine oder in Gemischen aus mindestsens zwei Vernetzungsmitteln verwendet werden.

Beispielhafte und bevorzugte Pfropfmittel (VII) sind Allylmethacrylat, Triallylcyanurat, Triallylisocyanurat oder Mischungen hieraus. Allylmethacrylat kann auch als Vernetzungsmittel (VI) eingesetzt werden. Die Pfropfmittel können alleine oder in Gemischen aus mindestens zwei Pfropfmitteln verwendet werden.

Die Menge an Vernetzungsmittel (VI) und Pfropfmittel (VII) beträgt 0,1 bis 20 Gew.%, bezogen auf das gesamte Gewicht der Polyalkyl(meth)acrylatkautschuk-Komponente des Silikonacrylat-Kautschuks.

Der Silikonacrylat-Kautschuk wird hergestellt, indem zunächst der Silikonkautschuk als wäßriger Latex hergestellt wird. Dabei kann der Silikonkautschuk durch Emulsionspolymerisation hergestellt werden, wie beispielsweise in US 2891920 und US 3294725 beschrieben. Dafür wird ein Gemisch enthaltend Organosiloxan, Vernetzungsmittel und gegebenenfalls Pfropfmittel unter Scherung mit Wasser vermischt, beispielsweise durch einen Homogenisator, in Gegenwart eines Emulgators auf Sulfonsäurebasis wie z.B. Alkylbenzolsulfonsäure oder Alkylsulfonsäure, wobei die Mischung zum Silikonkautschuklatex auspolymerisiert. Besonders geeignet ist eine Alkylbenzolsulfonsäure, da sie nicht nur als Emulgator, sondern auch als Polymerisationsinitiator wirkt. In diesem Fall ist eine Kombination der Sulfonsäure mit einem Metallsalz einer Alkylbenzolsulfonsäure oder mit einem Metallsalz einer Alkylsulfonsäure günstig, weil dadurch das Polymer während der späteren Pfropfpolymerisation stabilisiert wird.

Nach der Polymerisation wird die Reaktion beendet, indem die Reaktionsmischung durch Zugabe einer wässrigen alkalischen Lösung neutralisiert wird, z.B. durch Zugabe einer wässrigen Natriumhydroxid, Kaliumhydroxid oder Natriumcarbonat-Lösung.

Dieser Latex wird anschließend mit den zu verwendenden Methacrylsäurealkylestern und/oder Acrylsäurealkylestern, dem Vernetzungsmittel (VI) und dem Pfropfmittel (VII) angereichert, und eine Polymerisation wird durchgeführt. Bevorzugt ist eine radikalisch initiierte Emulsionspolymerisation, beispielsweise durch einen Peroxid-, einen Azo- oder Redoxinitiator. Besonders bevorzugt ist die Verwendung eines Redoxinitiatorsystems, speziell eines Sulfoxylat-Initiatorsystems hergestellt durch Kombiniation von Eisensulfat, Dinatriumethylendiamintetraacetat, Rongalit und Hydroperoxid.

Das Pfropfmittel (V), das bei der Herstellung des Silikonkautschuks verwendet wird, führt dabei dazu, daß der Polyalkyl(meth)acrylatkautschuk-Anteil kovalent an den Silikonkautschuk-Anteil angebunden wird. Bei der Polymerisation durchdringen sich die beiden Kautschuk-Komponenten gegenseitig und bilden so den Komposit-Kautschuk, der sich nach der Polymerisation nicht mehr in seine Bestandteile aus Silikonkautschuk-Komponente und Polyalkyl(meth)acrylatkautschuk-Komponente trennen läßt.

Zur Herstellung der Silikonacrylat-Pfropfkautschuke B werden die Monomere B.1 auf die Kautschuk-Grundlage B.2. aufgepfropft.

Dabei können die beispielsweise in EP 249964, EP 430134 und US 4888388 beschriebenen Polymerisationsmethoden angewendet werden.

Beispielsweise erfolgt die Pfropfpolymerisation nach folgender Polymerisationsmethode: In einer ein- oder mehrstufigen radikalisch initiierten Emulsionspolymerisation werden die gewünschten Vinylmonomere B.1 auf die Pfropfgrundlage, die als wässriger Latex vorliegt, aufpolymerisiert. Die Pfropfeffizienz soll dabei möglichst hoch sein und beträgt bevorzugt größer oder gleich 10%. Die Pfropfeffizienz hängt maßgeblich vom verwendeten Pfropfmittel (V) bzw. (VII) ab. Nach der Polymerisation zum Silikonacrylat-Pfropfkautschuk wird der wässrige Latex in heißes Wasser gegeben, in dem zuvor Metallsalze gelöst wurden, wie z.B. Calciumchlorid oder Magnesiumsulfat. Dabei koaguliert der Silikonacrylat-Pfropfkautschuk und kann anschließend separiert werden.

**Komponente C**

Pfropfpolymerisate gemäß Komponente C umfassen ein oder mehrere Pfropfpolymerisate von

C.1 5 bis 95 Gew.-%, wenigstens eines Vinylmonomeren auf

C.2 95 bis 5 Gew.-% wenigstens einer Pfropfgrundlage ausgewählt aus mindestens einem Dienkautschuk der Gruppe bestehend aus Butadienkautschuk und Isoprenkautschuk

Monomere C.1 sind vorzugsweise Gemische aus

C.1.1 50 bis 99 Gew.-Teilen (bezogen auf die Summe von C.1.1 und C.1.2 gleich 100 Gew.-Teile) Vinylaromaten und/oder kernsubstituierten Vinylaromaten (wie Styrol, $\alpha$-Methylstyrol, p-Methylstyrol, p-Chlorstyrol) und/oder (Meth)Acrylsäure-($C_1$-$C_8$)-Alkylester, wie Methylmethacrylat, Ethylmethacrylat), und

C.1.2 1 bis 50 Gew.-Teilen (bezogen auf die Summe von C.1.1 und C.1.2 gleich 100 Gew.-Teile) Vinylcyanide (ungesättigte Nitrile wie Acrylnitril und Methacrylnitril) und/oder (Meth)Acrylsäure-($C_1$-$C_8$)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Die Pfropfgrundlage C.2 hat im Allgemeinen eine mittlere Teilchengröße ($d_{50}$-Wert) von 0,05 bis 10 $\mu$m, vorzugsweise 0,1 bis 5 $\mu$m, besonders bevorzugt 0,2 bis 1 $\mu$m.

Bevorzugte Monomere C.1.1 sind ausgewählt aus mindestens einem der Monomere Styrol, $\alpha$-Methylstyrol und Methylmethacrylat, bevorzugte Monomere C.1.2 sind ausgewählt aus mindestens einem der Monomere Acrylnitril, Maleinsäureanhydrid und Methylmethacrylat. Besonders bevorzugte Monomere sind C.1.1 Styrol und C.1.2 Acrylnitril.

Pfropfgrundlagen C.2 sind Dienkautschuke ausgewählt ist aus mindestens einem Dienkautschuk der Gruppe bestehend aus Butadienkautschuk und Isoprenkautschuk. Die Pfropfgrundlagen C.2 weisen im Allgemeinen eine Glasübergangstemperatur von < 10°C, vorzugsweise < 0°C, besonders bevorzugt < -10°C auf.

Besonders bevorzugte Pfropfpolymerisate C sind beispielsweise ABS-Polymerisate (Emulsions-, Masse- und Suspensions-ABS), wie sie z.B. in der DE-OS 2 035 390 (=US 3 644 574) oder in der DE-OS 2 248 242 (=GB 1 409 275) bzw. in Ullmanns, Enzyklopädie der Technischen Chemie, Bd. 19 (1980), S. 280 ff. beschrieben sind. Der Gelanteil der Pfropfgrundlage C.2 beträgt mindestens 20 Gew.-%, im Falle von im Emulsionspolymerisation hergestellten Pfropfgrundlagen C.2 vorzugsweise mindestens 40 Gew.-% (in Toluol gemessen).

Vorzugsweise weist das Pfropfpolymerisat aus den Komponenten C.1 und C.2 eine Kern-Schale-Struktur auf, wobei die Komponente C.1 die Schale bildet (auch als Hülle bezeichnet) und die Komponente C.2 den Kern ausbildet (siehe bspw. Ullmann's Encyclopedia of Industrial Chemistry, VCH-Verlag, Vol. A21, 1992, Seite 635 und Seite 656.

Die Pfropfpolymerisate C werden durch radikalische Polymerisation, z.B. durch Emulsions-, Suspensions-, Lösungs- oder Massepolymerisation, vorzugsweise durch Emulsions- oder Massepolymerisation hergestellt.

In einer bevorzugten Ausführungsform handelt es sich bei dem Pfropfpolymerisat gemäß Komponente C) um ein im Emulsions-Polymerisationsverfahren hergestelltes Pfropfpolymerisat, welches eine Pfropfgrundlage C.2 mit einer mittlere Teilchengröße ($d_{50}$-Wert) von 0,15 bis 0,4 $\mu$m, vorzugsweise 0,2 bis 0,4 $\mu$m, besonders bevorzugt 0,25 bis 0,35 $\mu$m enthält. Besonders geeignet sind Pfropfpolymerisate, die im Emulsionspolymerisationsverfahren durch Redox-Initiierung mit einem Initiatorsystem aus organischem Hydroperoxid und Ascorbinsäure gemäß US 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch (Co)Polymerisation der Pfropfmonomere in Gegenwart der Pfropfgrundlage gewonnen werden und bei der Aufarbeitung mit anfallen.

In einer weiteren bevorzugten Ausführungsform handelt es sich bei dem Pfropfpolymerisat gemäß Komponente

C um ein im Masse-, Lösungs- oder Masse-Suspensions-Polymerisationsverfahren hergestelltes Pfropfpolymerisat, das einen Kautschukgehalt (entspricht dem Anteil der Komponente C.2 am Pfropfpolymerisat C) von 16 bis 25 Gew.-%, vorzugsweise von 17 bis 19 Gew.-% aufweist sowie eine Pfropfhülle, die jeweils bezogen auf die Monomere der Pfropfhülle 22 bis 27 Gew.-% mindestens eines der Monomeren gemäß C.1.2 und 73 bis 78 Gew.-% mindestens eines der Monomeren gemäß C.1.1 enthält. Das Pfropfpolymer weist einen Gelgehalt (gemessen in Aceton) von 20 bis 30 Gew.-%, vorzugsweise von 22 bis 26 Gew.-% auf. Enthält das erfindungsgemäße Pfropfpolymerisat einen Kautschukgehalt von unter 16 Gew.-%, hat dies den Nachteil, dass die mechanischen Eigenschaften, insbesondere die Kerbschlagzähigkeit und die Chemikalienbeständigkeit, auf einem für viele Anwendungen nicht ausreichenden Niveau liegen.

Der Gelgehalt der Pfropfgrundlage C.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

**Komponente D**

Als Flammschutzmittel gemäß Komponente D werden phosphorhaltige Verbindungen eingesetzt.

Dabei handelt es sich um Mono- und oligomere Phosphorsäureester der Formel (VIII)

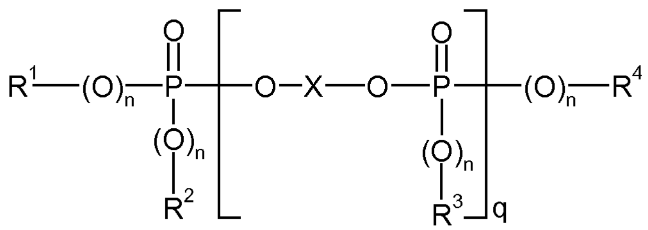

(VIII)

worin

$R^1$, $R^2$, $R^3$ und $R^4$ für Kresyl, Phenyl, Xylenyl, Propylphenyl oder Butylphenyl steht, n gleich 1 ist,
q für Werte von 0,5 bis 6 steht, und
X sich von Resorcin, Hydrochinon, Bisphenol A oder Diphenylphenol ableitet.
q ist bevorzugt 1,05 bis 1,6, höchst bevorzugt 1,05 bis 1,2.

Besonders bevorzugt leitet sich X von Bisphenol A ab.

Als erfindungsgemäße Komponente D können auch Mischungen verschiedener Phosphate eingesetzt werden.

Phosphorverbindungen der Formel (VIII) sind insbesondere Resorcin verbrücktes Oligophosphat und Bisphenol A verbrücktes Oligophosphat. Der Einsatz von oligomeren Phosphorsäureestern der Formel (VIII), die sich vom Bisphenol A ableiten, ist insbesondere bevorzugt.

Höchst bevorzugt als Komponente D ist Bisphenol-A basierendes Oligophosphat gemäß Formel (VIIIa),

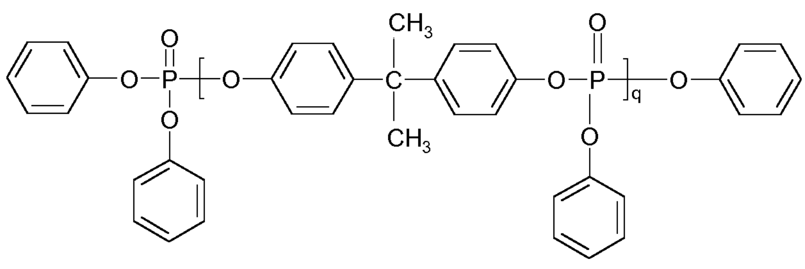

(VIIIa)

wobei q in Formel (VIIIa) für Werte von 1,05 bis 1,2 steht.

Die Phosphorverbindungen gemäß Komponente D sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Wenn Mischungen verschiedener Phosphorverbindungen eingesetzt werden und im Fall von oligomeren Phosphorverbindungen, handelt es sich bei dem angegebenen q-Wert um den mittleren q-Wert. Der mittlere q-Wert kann bestimmt werden, indem mittels geeigneter Methode (Gaschromatographie (GC), High Pressure Liquid Chromatography (HPLC), Gelpermeationschromatographie (GPC)) die Zusammensetzung der Phosphorverbindung (Molekulargewichtsverteilung) bestimmt wird und daraus die Mittelwerte für q berechnet werden.

Die Flammschutzmittel können allein oder in beliebiger Mischung eingesetzt werden.

**Komponente E**

Die Zusammensetzung kann weitere handelsübliche Zusatzstoffe gemäß Komponente E wie Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkyl-Sulfonate oder Polyamid-haltige Polymere), Säuren, Füll- und Verstärkungsstoffe (beispielsweise Glas- oder Karbonfasern, Glimmer, Kaolin, Talk, $CaCO_3$ und Glasschuppen) sowie Farbstoffe und Pigmente enthalten.

**Herstellung der Formmassen und Formkörper**

Die erfindungsgemäßen thermoplastischen Formmassen werden hergestellt, indem man die jeweiligen Bestandteile in bekannter Weise vermischt und bei Temperaturen von 240°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Fernsehgeräte, Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen und für Fernsehgeräte, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

Beispiele

Komponente A

Unverzweigtes Polycarbonat auf Basis Bisphenol A mit einer relativen Lösungsviskosität von $\eta_{rel}$ = 1,28, gemessen in $CH_2Cl_2$ als Lösungsmittel bei 25°C und einer Konzentration von 0,5 g/100 ml.

Komponente B-1

Schlagzähmodifikator, Pfropfpolymerisat von

- B-1.1 11 Gew.-% Methylmethacrylat auf
- B-1.2 89 Gew.-% eines Silikonacrylat-Komposit-Kautschukes als Pfropfgrundlage, wobei der Silikonacrylat-Kautschuk
  - B-1.2.1 92 Gew.-% Silikonkautschuk- und
  - B-1.2.2 8 Gew.-% Polyalkyl(meth)acrylatkautschuk-enthält, und

wobei sich die beiden genannten Kautschuk-Komponenten B.2.1 und B.2.2 im Komposit-Kautschuk gegenseitig durchdringen, so daß sie sich nicht wesentlich voneinander trennen lassen.

Komponente B-2

Schlagzähmodifikator, Pfropfpolymerisat von

B-2.1 17 Gew.-% Methylmethacrylat auf
B-2.2 83 Gew.-% eines Silikonacrylat-Komposit-Kautschukes als Pfropfgrundlage, wobei der Silikonacrylat-Kautschuk

B-2.2.1 11 Gew.-% Silikonkautschuk- und
B-2.2.2 89 Gew.-% Polyalkyl(meth)acrylatkautschuk-enthält, und

wobei sich die beiden genannten Kautschuk-Komponenten B.2.1 und B.2.2 im Komposit-Kautschuk gegenseitig durchdringen, so daß sie sich nicht wesentlich voneinander trennen lassen.

Komponente C-1

ABS-Polymerisat hergestellt durch Masse-Polymerisation von 82 Gew.-% bezogen auf das ABS-Polymerisat einer Mischung aus 24 Gew.-% Acrylnitril und 76 Gew.-% Styrol in Gegenwart von 18 Gew.-% bezogen auf das ABS-Polymerisat eines Polybutadien-Styrol-Blockcopolymerkautschuks mit einem Styrolgehalt von 26 Gew.-%. Das gewichtsgemittelte Molekulargewicht $M_w$ des freien SAN-Copolymeranteils im ABS-Polymerisat beträgt 80000 g/mol (gemessen per GPC in THF). Der Gelgehalt des ABS-Polymerisats beträgt 24 Gew.-% (gemessen in Aceton).

Komponente C-2

ABS-Pfropfpolymerisat mit Kern-Schale-Struktur, hergestellt durch Emulsions-Polymerisation von 43 Gew.-% bezogen auf das ABS-Polymerisat einer Mischung aus 27 Gew.-% Acrylnitril und 73 Gew.-% Styrol in Gegenwart von 57 Gew.-% bezogen auf das ABS-Polymerisat eines teilchenförmig vernetzten Polybutadienkautschuks (mittlerer Teilchen-durchmesser $d_{50}$ = 0,35 μm).

Komponente D

Bisphenol-A-basierendes Oligophosphat

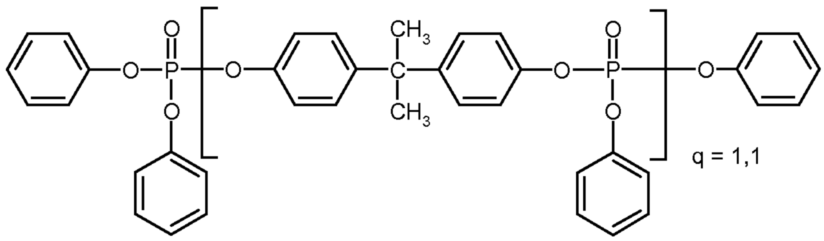

q = 1,1

Komponente E

Komponente E-1: CFP 6000 N, Polytetrafluorethylen-Pulver (Hersteller: Du Pont, Genf, Schweiz)
Komponente E-2: Pentaerythrittetrastearat
Komponente E-3: Irganox® B900 (Hersteller: Ciba Specialty Chemicals Inc., Basel, Schweiz)

Komponente F

Copolymerisat aus 77 Gew.-% Styrol und 23 Gew.-% Acrylnitril mit einem gewichtsgemittelten Molekulargewicht $M_w$ von 130 kg/mol (bestimmt durch GPC), hergestellt nach dem Masseverfahren.

**Herstellung und Prüfung der Formmassen**

Auf einem Zweischneckenextruder (ZSK-25) (Fa. Werner und Pfleiderer) werden die in den Tabellen 1-5 aufgeführten Einsatzstoffe bei einer Drehzahl von 225 Upm und einem Durchsatz von 20 kg/h bei einer Maschinentemperatur von 260°C compoundiert und granuliert.

Die fertigen Granulate werden auf einer Spritzgussmaschine zu den entsprechenden Probekörpern verarbeitet (Massetemperatur 260°C, Werkzeugtemperatur 80°C, Fließfrontgeschwindigkeit 240 mm/s). Die Charakterisierung erfolgt gemäß DIN EN ISO 527 (Reißdehnung bestimmt im Zugversuch), UL 94 V (an Stäben der Abmessung 127 x 12,7 x 1,0 mm gemessen) und ISO 11443 (Schmelzeviskosität).

Als Maß für die Chemikalienbeständigkeit der hergestellten Zusammensetzungen dient der Environmental Stress Cracking (ESC)-Test (ISO 4599), der wie folgt durchgeführt wird:

Mit Toluol:Isopropanol im Vol.-Verhältnis 60:40 als Testmedium (ISO 4599), Exposition bei 2,4% Randfaserdehnung, d.h. es wird die Zeitdauer ermittelt und angegeben, bei der Bruch des Probekörpers auftritt.

Als Maß für die Hydrolysebeständigkeit der hergestellten Zusammensetzungen dient die Änderung des MVR gemessen nach ISO 1133 bei 240°C mit einer Stempellast von 5 kg bei einer 7-tägigen Lagerung des Granulats bei 95°C und 100% relativer Luftfeuchte ("FWL-Lagerung"). Dabei wird der Anstieg des MVR-Wertes gegenüber dem MVR-Wert vor der entsprechenden Lagerung als AMVR(hydr.), welcher sich durch nachstehende Formel definiert, berechnet.

$$\Delta MVR(hydr.) = \frac{MVR(nach\,FWL - Lagerung) - MVR(vor\,Lagerung)}{MVR(vor\,Lagerung)} \bullet 100\%$$

Aus Tabelle 1 ist ersichtlich, dass die erfindungsgemäßen Zusammensetzungen der Beispiele 5, 7 und 9 eine höhere Hydrolysestabilität, eine höhere Chemikalienbeständigkeit (die Zeit bis zum Bruch im ESC-Test ist jeweils länger als 30 Minuten) und eine niedrigere Schmelzeviskosität aufweisen gegenüber den Zusammensetzungen der Vergleichsbeispiele.

Tabelle 1: Zusammensetzungen und ihre Eigenschaften

| Komponenten (Gew.-Teile) | | **1 (Vgl.)** | **2 (Vgl.)** | **3 (Vgl.)** | **4 (Vgl.)** | **5** | **6 (Vgl.)** | **7** | **8 (Vgl.)** | **9** | **10 (Vgl.)** |
|---|---|---|---|---|---|---|---|---|---|---|---|
| A | | 86,4 | 86,4 | 86,0 | 86,0 | 77,3 | 77,3 | 77,3 | 77,3 | 75,3 | 75,3 |
| B-1 | | 5,0 | | 5,2 | | 7,6 | | 5,05 | | 6,05 | |
| B-2 | | | 5,0 | | 5,2 | | 7,6 | | 5,05 | | 6,05 |
| C-1 | | | | | | | | | | 6,05 | 6,05 |
| C-2 | | | | | | 2,5 | 2,5 | 5,05 | 5,05 | | |
| D | | 8,6 | 8,6 | 8,8 | 8,8 | 12,6 | 12,6 | 12,6 | 12,6 | 12,6 | 12,6 |
| E-1 | | 0,4 | 0,4 | 0,4 | 0,4 | 0,4 | 0,4 | 0,4 | 0,4 | 0,4 | 0,4 |
| E-2 | | 0,4 | 0,4 | 0,4 | 0,4 | 0,4 | 0,4 | 0,4 | 0,4 | 0,4 | 0,4 |
| E-3 | | 0,1 | 0,1 | 0,1 | 0,1 | 0,1 | 0,1 | 0,1 | 0,1 | 0,1 | 0,1 |
| F | | - | - | 2,6 | 2,6 | - | - | - | - | - | - |
| Eigenschaften | | | | | | | | | | | |
| ESC-Test (Toluol:Isopropanol) Zeit bis zum Bruch | h : min | 09:10 | 01:28 | 16:08 | 02:08 | >30:00 | 24:45 | >30:00 | 12:05 | >30:00 | 16:43 |
| Schmelzeviskosität260°C [1000 s-1] | Pa·s | 381 | 387 | 318 | 341 | 260 | 286 | 262 | 284 | 219 | 237 |
| UL 94 V bei 1.0 mm Dicke, Gesamtnachbrennzeit | sek | 17 | 33 | 22 | 27 | 25 | 31 | 27 | 34 | 37 | 63 |
| Reißdehnung | % | 109 | 106 | 111 | 108 | 107 | 98 | 103 | 100 | 104 | 99 |
| AMVR (hydr.) | % | 44 | > 100 | 48 | > 100 | 15 | 55 | 16 | 35 | 70 | > 100 |

**Patentansprüche**

1. Zusammensetzungen enthaltend

A) 40 bis 99 Gew.-Teile (jeweils bezogen auf die Summe der Gewichtsteile der Komponenten A+B+C+D) aromatisches Polycarbonat und/oder aromatisches Polyestercarbonat,
B) 0,5 bis 20 Gew.-Teile (jeweils bezogen auf die Summe der Gewichtsteile der Komponenten A+B+C+D) Pfropfpolymerisat, **dadurch gekennzeichnet, dass** die Pfropfgrundlage ein Silikonacrylat-Komposit-Kautschuk aus sich gegenseitig durchdringendem Silikonkautschuk- und Polyalkyl(meth)acrylatkautschuk ist, wobei der Anteil an Silikonkautschuk 65 - 95 Gew.-% (bezogen auf die Pfropfgrundlage) beträgt,
C) 2 - 8 Gew.-Teile (jeweils bezogen auf die Summe der Gewichtsteile der Komponenten A+B+C+D) Pfropfpolymerisat, **dadurch gekennzeichnet, dass** Komponente C ein Pfropfpolymerisat von

C.1 5 bis 95 Gew.-%, wenigstens eines Vinylmonomeren auf
C.2 95 bis 5 Gew.-% wenigstens einer Pfropfgrundlage ausgewählt ist aus mindestens einem Dienkautschuk der Gruppe bestehend aus Butadienkautschuk und Isoprenkautschuk,

D) 0,4 bis 20 Gew.-Teile (jeweils bezogen auf die Summe der Gewichtsteile der Komponenten A+B+C+D) Flammschutzmittel ausgewählt aus der Gruppe bestehend aus Mono- und oligomeren Phosphorsäureester der Formel (VIII)

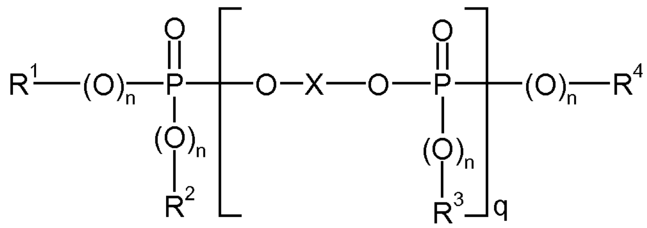
(VIII)

worin

$R^1$, $R^2$, $R^3$ und $R^4$ für Kresyl, Phenyl, Xylenyl, Propylphenyl oder Butylphenyl steht,
n gleich 1 ist,
q für Werte von 0,5 bis 6 steht, und
X sich von Resorcin, Hydrochinon, Bisphenol A oder Diphenylphenol ableitet,

E) 0 bis 50 Gew.-Teile (jeweils bezogen auf die Summe der Gewichtsteile der Komponenten A+B+C+D) eines oder mehrerer Zusatzstoffe ausgewählt aus der Gruppe bestehend aus Flammschutzsynergisten, Antidrippingmittel, Gleit- und Entformungsmittel, Nukleiermittel, Stabilisatoren, Antistatika, Säuren, Füll- und Verstärkungsstoffe sowie Farbstoffe und Pigmente,
wobei die Zusammensetzung frei ist von kautschukfreiem Vinyl(Co)Polymerisat und Polyalkylenterephthalat,

2. Zusammensetzung gemäß Anspruch 1 enthaltend als Komponente B ein Pfropfpolymerisat von

B.1 5 bis 95 Gew.-% eines oder mehrerer Vinylmonomeren auf
B.2 95 bis 5 Gew.-% eines oder mehrerer Silikonacrylat- Komposit-Kautschuke als Pfropfgrundlage, wobei der Silikonacrylat-Kautschuk

B.2.1 65 - 95 Gew.-% Silikonkautschuk- und
B.2.2 35 bis 5 Gew.-% Polyalkyl(meth)acrylatkautschuk enthält,

wobei sich die beiden genannten Kautschuk-Komponenten B.2.1 und B.2.2 im Komposit-Kautschuk gegenseitig durchdringen, so daß sie sich nicht wesentlich voneinander trennen lassen.

3. Zusammensetzung gemäß Anspruch 2, wobei die Vinylmonomere B.1 ausgewählt sind aus mindestens einem der Gruppe bestehend aus Styrol, $\alpha$-Methylstyrol, Methylmethacrylat, n-Butylacrylat und Acrylnitril.

**4.** Zusammensetzung gemäß Anspruch 1 enthaltend als Komponente C ein Pfropfpolymerisat mit Kern-Schale-Struktur hergestellt im Emulsions-Polymerisationsverfahren, welches eine Pfropfgrundlage C.2 mit einer mittlere Teilchengröße ($d_{50}$-Wert) von 0,15 bis 0,4 μm enthält.

**5.** Zusammensetzung gemäß Anspruch 1 enthaltend als Komponente C ein Pfropfpolymerisat mit Kern-Schale-Struktur hergestellt im Masse-, Lösungs- oder Masse-Suspensions-Polymerisationsverfahren, das einen Kautschukgehalt (Anteil der Komponente C.2 am Pfropfpolymerisat C) von 16 bis 25 Gew.-% aufweist sowie eine Pfropfhülle, die jeweils bezogen auf die Monomere der Pfropfhülle 22 bis 27 Gew.-% mindestens eines der Monomeren gemäß C.1.2 und 73 bis 78 Gew.-% mindestens eines der Monomeren gemäß C.1.1 enthält.

**6.** Zusammensetzung gemäß Anspruch 1 enthaltend als Komponente D Bisphenol-A basierendes Oligophosphat gemäß Formel (VIIIa),

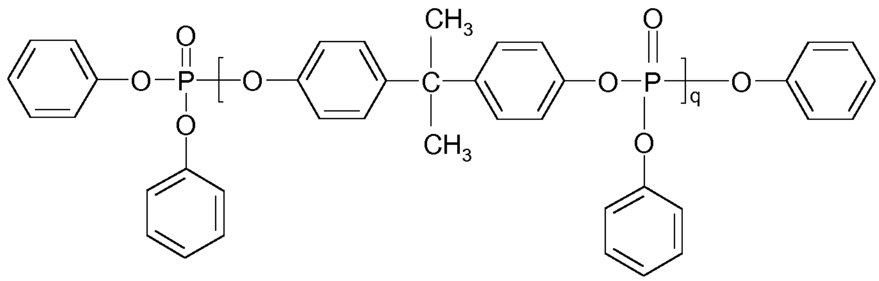

(VIIIa)

wobei q in Formel (VIIIa) für Werte von 1,05 bis 1,2 steht.

**7.** Verwendung der Zusammensetzungen gemäß Anspruch 1 zur Herstellung von Formkörpern.

**8.** Formkörper, enthaltend eine Zusammensetzung nach einem der Ansprüche 1 bis 6.

**9.** Formkörper nach Anspruch 8 **dadurch gekennzeichnet, dass** der Formkörper ein Teil eines Kraftfahrzeugs, Schienenfahrzeugs, Luftfahrzeugs oder Wasserfahrzeugs oder Folien, Profile oder Gehäuseteile jeder Art ist.

## Claims

**1.** Compositions comprising

A) 40 to 99 parts by wt. (in each case based on the sum of the parts by weight of components A+B+C+D) of aromatic polycarbonate and/or aromatic polyester carbonate,
B) 0.5 to 20 parts by wt. (in each case based on the sum of the parts by weight of components A+B+C+D) of graft polymer, **characterized in that** the graft base is a silicone/acrylate composite rubber of mutually penetrating silicone rubber and polyalkyl (meth)acrylate rubber, wherein the content of silicone rubber is 65 - 95 wt.% (based on the graft base),
C) 2 - 8 parts by wt. (in each case based on the sum of the parts by weight of components A+B+C+D) of graft polymer, **characterized in that** component C a graft polymer of

C.1 5 to 95 wt.% of at least one vinyl monomer on
C.2 95 to 5 wt.% of at least one graft base is chosen from at least one rubber of the group consisting of butadiene rubber and isoprene rubber,

D) 0.4 to 20 parts by wt. (in each case based on the sum of the parts by weight of components A+B+C+D) of flameproofing agent chosen from the group consisting of mono- and oligomeric phosphoric acid esters of the formula (VIII)

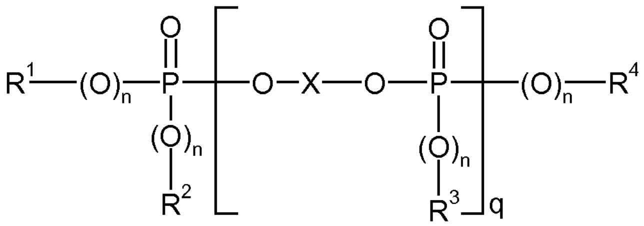

(VIII)

wherein

$R^1$, $R^2$, $R^3$ and $R^4$ represent cresyl, phenyl, xylenyl, propylphenyl or butylphenyl,
n is 1,
q represents values from 0.5 to 6 and
X is derived from resorcinol, hydroquinone, bisphenol A or diphenylphenol.

E) 0 to 50 parts by wt. (in each case based on the sum of the parts by weight of components A+B+C+D) of one or more additives chosen from the group consisting of flameproofing synergists, antidripping agents, lubricants and mould release agents, nucleating agents, stabilizers, antistatics, acids, fillers and reinforcing substances and dyestuffs and pigments.
wherein the composition is free of rubber-free vinyl (co)polymer and polyalkylene terephthalate,

**2.** Composition according to claim 1, comprising as component B a graft polymer of

B.1 5 to 95 wt.% of one or more vinyl monomers on
B.2 95 to 5 wt.% of one or more silicone/acrylate composite rubbers as the graft base, wherein the silicone/acrylate rubber contains
B.2.1 65 - 95 wt.% of silicone rubber and
B.2.235 to 5 wt.% of polyalkyl (meth)acrylate rubber,

wherein the two rubber components B.2.1 and B.2.2 mentioned are mutually penetrating in the composite rubber, so that they cannot be separated substantially from one another.

**3.** Composition according to claim 2, wherein the vinyl monomers B.1 are chosen from at least one of the group consisting of styrene, α-methylstyrene, methyl methacrylate, n-butyl acrylate and acrylonitrile.

**4.** Composition according to claim 1, comprising as component C a graft polymer with a core-shell structure prepared in the emulsion polymerization process, which has a graft base C.2 with an average particle size ($d_{50}$ value) of from 0.15 to 0.4 μm.

**5.** Composition according to claim 1, comprising as component C a graft polymer with a core-shell structure prepared in the bulk, solution or bulk-suspension polymerization process, which has a rubber content (content of component C.2 in the graft polymer C) of from 16 to 25 wt.%, and a grafted shell which contains, in each case based on the monomers of the grafted shell, 22 to 27 wt.% of at least one of the monomers according to C.1.2 and 73 to 78 wt.% of at least one of the monomers according to C.1.1.

**6.** Composition according to claim 1, comprising as component D bisphenol A-based oligophosphate according to formula (VIIIa)

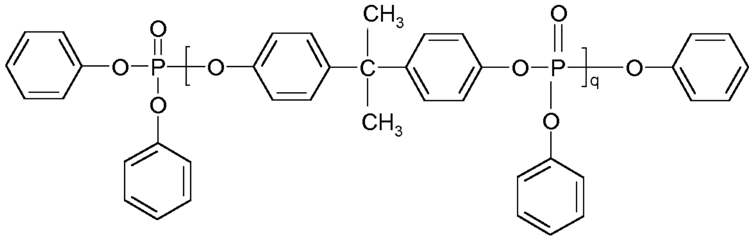

(VIIIa)

wherein q in formula (VIIIa) represents values from 1.05 to 1.2.

**7.** Use of the compositions according to claim 1 for the production of shaped articles.

**8.** Shaped article comprising a composition according to one of claims 1 to 6.

**9.** Shaped article according to claim 8, **characterized in that** the shaped article is a part of a motor vehicle, rail vehicle, aircraft or aquatic vehicle or films, profiles or housing components of all types.

## Revendications

**1.** Compositions contenant

A) 40 à 99 parties en poids (à chaque fois par rapport à la somme des parties en poids des composants A + B + C + D) de polycarbonate aromatique et/ou de polyestercarbonate aromatique,
B) 0,5 à 20 parties en poids (à chaque fois par rapport à la somme des parties en poids des composants A + B + C + D) de polymère greffé, **caractérisé**
**en ce que** la base de greffage est un caoutchouc composite de silicone-acrylate constitué de caoutchouc de silicone et de caoutchouc de poly((méth)acrylate d'alkyle) qui s'interpénètrent mutuellement, la proportion de caoutchouc de silicone valant 65-95% en poids (par rapport à la base de greffage),
C) 2 à 8 parties en poids (à chaque fois par rapport à la somme des parties en poids des composants A + B + C + D) de polymère greffé, **caractérisé**
**en ce que** le composant C est un polymère greffé de

C.1 5 à 95% en poids d'au moins un monomère de vinyle sur
C.2 95 à 5 % en poids d'au moins une base de greffage, choisie parmi au moins un caoutchouc de diène du groupe constitué par le caoutchouc de butadiène et le caoutchouc d'isoprène,

D) 0,4 à 20 parties en poids (à chaque fois par rapport à la somme des parties en poids des composants A + B + C + D) d'agent ignifuge choisi dans le groupe constitué par les esters monomères et oligomères de l'acide phosphorique de formule (VIII)

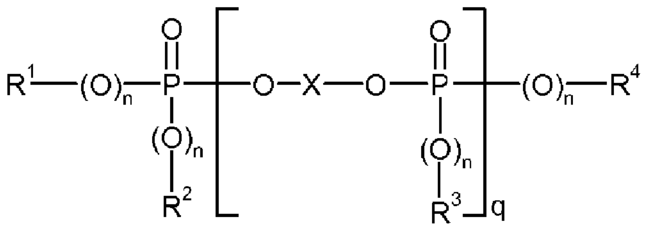

(VIII)

dans laquelle

$R^1$, $R^2$, $R^3$ et $R^4$ représentent crésyle, phényle, xylényle, propylphényle ou butylphényle,
n vaut 1,
q représente des valeurs de 0,5 à 6 et
X est dérivé de résorcinol, d'hydroquinone, de bisphénol A ou de diphénylphénol,

E) 0 à 50 parties en poids (à chaque fois par rapport à la somme des parties en poids des composants A + B + C + D) d'un ou de plusieurs additifs choisis dans le groupe constitué par les synergistes d'agent ignifuge, les agents antigoutte, les lubrifiants et les agents de démoulage, les agents de nucléation, les stabilisateurs, les antistatiques, les acides, les charges et les substances de renforcement ainsi que les colorants et les pigments, la composition étant exempte de (co)polymère de vinyle et de poly(téréphtalate d'alkylène).

**2.** Composition selon la revendication 1, contenant, comme composant B, un polymère greffé de

B.1 5 à 95% en poids d'un ou de plusieurs monomères de vinyle sur

B.2 95 à 5% en poids d'un ou de plusieurs caoutchoucs composites de silicone-acrylate comme base de greffage, le caoutchouc de silicone-acrylate contenant

B.2.1 65-95% en poids de caoutchouc de silicone et
B.2.2 35 à 5% en poids de caoutchouc de poly((méth)acrylate d'alkyle),

les deux composants de caoutchouc mentionnés B.2.1 et B.2.2 s'interpénétrant mutuellement dans le caoutchouc composite de manière telle qu'ils ne peuvent essentiellement pas être séparés l'un de l'autre.

**3.** Composition selon la revendication 2, les monomères de vinyle B.1 étant choisis parmi au moins l'un du groupe constitué par le styrène, l'$\alpha$-méthylstyrène, le méthacrylate de méthyle, l'acrylate de n-butyle et l'acrylonitrile.

**4.** Composition selon la revendication 1, contenant, comme composant C, un polymère greffé présentant une structure à noyau-coquille préparé dans un procédé de polymérisation en émulsion, qui contient une base de greffage C.2 présentant une grosseur moyenne de particule (valeur $d_{50}$) de 0,15 à 0,4 $\mu$m.

**5.** Composition selon la revendication 1, contenant, comme composant C, un polymère greffé présentant une structure à noyau-coquille, préparé dans un procédé de polymérisation en masse, en solution, ou en masse-suspension, qui présente une teneur en caoutchouc (proportion du composant C.2 par rapport au polymère greffé C) de 16 à 25% en poids ainsi qu'une enveloppe de greffage, qui contient à chaque fois, par rapport aux monomères de l'enveloppe de greffage, 22 à 27% en poids d'au moins un des monomères selon C.1.2 et 73 à 78% en poids d'au moins un des monomères selon C.1.1.

**6.** Composition selon la revendication 1, contenant comme composant D un oligophosphate à base de bisphénol-A selon la formule (VIIIa)

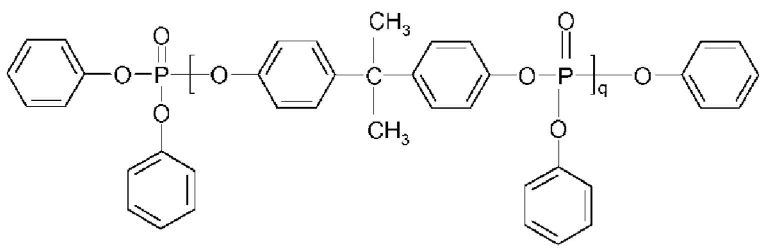

(VIIIa)

q dans la formule (VIIIa) représentant des valeurs de 1,05 à 1,2.

**7.** Utilisation des compositions selon la revendication 1 pour la fabrication de corps moulés.

**8.** Corps moulé contenant une composition selon l'une quelconque des revendications 1 à 6.

**9.** Corps moulé selon la revendication 8, **caractérisé en ce que** le corps moulé est une pièce d'un véhicule automobile, d'un véhicule ferroviaire, d'un avion ou d'un bateau ou une feuille, un profilé ou une partie de boîtier de n'importe quel type.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2002077417 A1
- JP 8259791 A
- JP 2000017136 A
- JP 2002069282 A
- WO 0039210 A
- EP 0641827 A
- JP 07316409 A
- DE 102007002925 A1
- DE AS1495626 B
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- US 5807914 A
- EP 430134 A
- US 4888388 A
- US 2891920 A
- US 3294725 A
- DE OS3631540 A
- EP 249964 A
- DE OS2035390 A
- US 3644574 A
- DE OS2248242 A
- GB 1409275 A
- US 4937285 A
- EP 0363608 A
- EP 0640655 A


### In der Beschreibung aufgeführte Nicht-Patentliteratur


- **W. SCHOLTAN ; H. LANGE ; KOLLOID-Z.** *Z. Polymere,* 1972, vol. 250, 782-796
- **ULLMANNS.** Enzyklopädie der Technischen Chemie. 1980, vol. 19, 280
- Ullmann's Encyclopedia of Industrial Chemistry. VCH-Verlag, 1992, vol. A21, 635, , 656
- **M. HOFFMANN ; H. KRÖMER ; R. KUHN.** Polymeranalytik I und II. Georg Thieme-Verlag, 1977
- **W. SCHOLTAN ; H. LANGE ; KOLLOID, Z.** *Z. Polymere,* 1972, vol. 250, 782-796
- Ullmanns Enzyklopädie der technischen Chemie. 1979, vol. 18, 301
- **HOUBEN-WEYL.** Methoden der organischen Chemie. vol. 12/1, 43
- Beilstein. vol. 6, 177